# EUROPEAN PATENT APPLICATION

(11) **EP 1 965 306 A1**
(43) Date of publication of application: **03.09.2008**
(21) Application number: 06822997.0
(22) Date of filing: 06.11.2006
(51) Int. Cl.: G06F 13/00, H04B 7/26, H04M 11/00

(54) **SCREEN DISPLAY METHOD, AND SCREEN DISPLAY DEVICE**

(30) Priority: 19.12.2005 JP 2005364851
(71) Applicant: Softbank Mobile Corp., Minato-ku, Tokyo 105-7317 (JP)
(72) Inventor: SHIBATA, Akiho, Tokyo 105-7317 (JP)
(74) Representative: Gervasi, Gemma
(86) International application number: PCT/JP2006/322083
(87) International publication number: WO 2007/072636

(57) **Abstract**

Provided is a screen display method for enabling a screen, which can be customized for each user, to be displayed without burdening a heavy load on a server and communication line and for a short wait time for the user. The screen display method comprises the step of storing a predetermined area with a content object downloaded according to a push type delivery, the step of downloading, in accordance with the push type delivery or the like, an electronic document for displaying a screen containing a portion obtained with the content object, that is, an electronic document, in which the content object stored in the predetermined area is described in advance with the discrimination information of the predetermined area and the discrimination information of the content object, and the step of reading the content object from the predetermined area in accordance with the description of the electronic document, and displaying the screen containing the portion obtained with the content object.

## Description

### Technical Field

The present invention relates to a picture display method and a picture display apparatus for displaying a picture. More particularly, the present invention relates to a picture display method and a picture display apparatus for displaying a picture according to an electronic document and the content object specified by the electronic document.

### Background Art

A standby picture is displayed on the display screen of a portable telephone set during the so-called standby time (when any talk or communication does not take place). A function menu picture is also provided for the user to take out a function (from a variety of functions including a telephone book function, a talk function, a mail function, an WEB function, a camera function and a function of defining various parameters) so that the user can take out the function he or she wants from the menu picture. Additionally, an WEB menu picture is displayed when the portable telephone set starts its browser and the user can access a target WEB page, following a link, from the WEB menu picture. For instance, the initial picture of "Vodafone Live!" described in Non-Patent Document 1 corresponds to an WEB menu picture.
Non-Patent Document 1: "Vodafone Live!" [retrieved on November 9, 2005], Internet URL: http://www.vodafone.jp/japanese/live/index.html>

### Disclosure of the Invention

### Problem to be Solved by the Invention

The user can normally customize the standby picture. For example, the user can download a content object and display it in the standby picture. Additionally, the user can select an image as wallpaper. However, the user can customize a standby picture only to a limited extent and also a function menu picture. A conceivable simple technique for the user to customize a standby picture and a function menu picture may be the use of an interactive method. A potentially possible technique for the user to completely customize them may be generation of a standby picture and a function menu picture by means of an electronic document such as an HTML document that the user can prepare and edit as in the case of an WEB page.

An WEB menu picture can be downloaded according to pull delivery. Therefore, when the content object for forming an WEB menu picture on an WEB server is updated, the portable telephone set is required to download the updated content object in order to form and display an updated WEB menu picture. The above description is also applied to an WEB picture that a content object provider provides on the WEB.

As the volume of an WEB page for displaying a standby picture, a function menu picture, an WEB menu picture or some other picture increases, the time that has to be spent by the browser to download and display it is prolonged. A technique as described above is employed to dissolve this problem.

Browsers are provided with a cache memory. Then, the browser temporarily stores the WEB page downloaded from an WEB server in the cache memory. Thereafter, when the browser is requested to display the WEB page once again by the user, it does not download the WEB page from the Web server but reads it out from the cache memory and displays it. Thus, the time necessary for downloading the WEB page can be saved.

However, with this technique, when the WEB page stored in the cache memory is updated by the WEB server, the browser needs to download the updated WEB page. If such a situation is to be avoided, communication common carriers and content object providers cannot update WEB pages frequently.

Either of the two techniques described below needs to be employed for the browser to download an updated WEB page from an WEB server when a cache memory is utilized.

With the first technique, the WEB server transmits the WEB page requested by the browser along with the time and date of expiration of the WEB page. Then, the browser stores the WEB page in the cache memory along with the time and date of expiration of the WEB page. Thereafter, when the user requests the WEB page to be displayed once again, the browser determines if the current time and date is before the time and date of expiration or not. Then, the browser reads out the WEB page from the cache memory if the current time and date is before the time and date of expiration but otherwise it downloads the WEB page from the WEB server. With this technique, however, if the WEB page is updated on the WEB server before the time and date of expiration, the browser cannot download the updated WEB page until the time and date of expiration. Therefore, the operator needs to select early time and date of expiration to avoid such a situation. On the other hand, if the WEB page is not updated on the WEB server after the time and date of expiration, the browser needs to download the unchanged WEB page when the user requests the WEB page to be displayed once again after the time and date of expiration. In other words, the operator cannot select excessively early time and date of expiration in order to suppress wasteful communications.

With the second technique, the WEB server transmits the WEB page but does not transmit the time and date of expiration to the browser. The browser stores the downloaded WEB page in the cache memory. It also acquires the time and date when it downloaded the WEB page (download time and date) from an internal clock and stores the download time and date in the cache memory. Thereafter, when the user requests the WEB page to be displayed once again, the browser requests the WEB server to transmit the WEB page and attaches a request for notifying the download time and date and also for expiration verification. The WEB server holds the time and date when the WEB page is updated (update time and date) as current WEB page and compares the download time and date and the update time and date. When the download time and date is after the update time and date, it means that the cache memory of the browser stores the most updated WEB page. Then, the WEB server transmits only an "effective" message to the browser. When, on the other hand, the download time and date is before the update time and date, it means that the WEB page stored in cache memory of the browser is obsolete. Then, the WEB server transmits the most updated WEB page to the browser. This second technique is not accompanied by the problem of the first technique. However, both the quantity of arithmetic operations of a terminal and the time spent for the communication session that is held by the terminal and the WEB server increase with this technique. Then, as a result, it takes a long time to display the WEB page.

Additionally, for a user to customize the layout of an WEB page and the type of content object to be displayed in the WEB page, the WEB server is required to execute a process of preparing such an WEB page for the particular user. The quantity of data to be processed and transmitted will be enormous if an electronic document and a content object are provided to each of tens of millions of users in order to allow the user to form a customized web page.

In view of the above-identified circumstances, it is therefore the object of the present invention to provide a picture display method and a picture display apparatus for displaying a picture that can be customized by each user without any significant load that needs to be borne by the server and the communication line and with a short waiting time for each user.

### Means for Solving the Problem

According to the present invention, there is provided a picture display method comprising: a push-type content object downloading step of downloading a push-type content object according to push delivery and storing the push-type content object in a predetermined region; an electronic document inputting step of downloading according to push delivery or pull delivery or otherwise inputting an electronic document for displaying a picture including a part obtained by the push-type content object, the electronic document describing in advance the push-type content object stored in the predetermined region by means of identification information on the predetermined region and identification information on the push-type content object; and a picture displaying step of reading the push-type content object from the predetermined region according to the description of the electronic document and displaying the picture including the part obtained by the push-type content object.

In the picture display method as defined above, the downloading according to push delivery may be executed before a display of the picture is requested.

In the picture display method as defined above, the downloading according to push delivery may be executed when the push-type content object is updated on the server.

In the picture display method as defined above, the downloading according to push delivery may be executed in an idle time of a terminal.

In the picture display method as defined above, the downloading according to push delivery may be executed in a time zone when the quantity of communication is small.

In the picture display method as defined above, the identification information on the predetermined region may be explicit information or null information when the electronic document is also stored in the predetermined region.

The picture display method as defined above may further comprise a pull-type content object downloading step of downloading a pull-type content object according to pull delivery, and storing the pull-type content object in the predetermined region, wherein the electronic document is for displaying a picture including a part obtained by the pull-type content object, the electronic document describing in advance the pull-type content object stored in the predetermined region by means of identification information on the predetermined region and identification information on the pull-type content object, and wherein the picture displaying step is adapted to read the pull-type content object from the predetermined region according to the description of the electronic document and displaying the picture including the part obtained by the pull-type content object.

The picture display method as defined above may further comprise: a non-downloaded type content object storing step of storing a non-downloaded type content object input by means of a method other than downloading in the predetermined region, wherein the electronic document is for displaying a picture including a part obtained by the non-downloaded type content object, the electronic document describing in advance the non-downloaded type content object stored in the predetermined region by means of identification information on the predetermined region and identification information on the non-downloaded type content object, and wherein the picture displaying step is adapted to read the non-downloaded type content object from the predetermined region according to the description of the electronic document and displaying the picture including the part obtained by the non-downloaded type content object.

In the picture display method as defined above, the electronic document may be for displaying a picture including a part obtained by a pull-type content object downloaded according to pull delivery wherein the electronic document describes in advance the pull-type content object according to identification information on a position on a network where the pull-type content object exists and identification information on the pull-type content object, wherein the method further comprises a step of downloading the pull-type content object according to pull delivery from the position on the network in accordance with the description of the electronic document, and wherein the picture displaying step is adapted to display the picture including the part obtained by the pull-type content object.

In the picture display method as defined above, the downloading according to push delivery may be started in response to the reception by a terminal of a message for downloading.

In the picture display method as defined above, the message may be transmitted to the terminal when the push-type content object is updated under the control of a management server that manages both the update of the push-type content object and the transmission of the message, a management server that receives the report of the update of the push-type content object or a management server that monitors the update of the push-type content object.

In the picture display method as defined above, the message may include identification information on the position on the network where the push-type content object exists and identification information on the push-type content object.

In the picture display method as defined above, the predetermined region may include a plurality of regions for a picture of the same category, the push-type content object downloading step may be adapted to store the push-type content object at least in a selected one of the predetermined plurality of regions, and the picture displaying step may be adapted to read the push-type content object from the selected one of the predetermined plurality of regions.

In the picture display method as defined above, at least a part of the content object stored in a specific predetermined region of the plurality of predetermined regions may be excluded from the object of downloading according to the push delivery.

In the picture display method as defined above, the push-type content object having same identification information may be stored in each of the plurality of regions, and the picture displaying step may be adapted to read the push-type content object having the same identification information from a selected one of the plurality of regions according to the description of the electronic document.

The picture display method as defined above may further comprise a corresponding relationship holding step of holding the corresponding relationship between the directory information of the predetermined region and the information indicating that the predetermined region is specified, and the corresponding relationship is referred to when storing the push-type content object in the predetermined region and when reading the push-type content object from the predetermined region.

### [Effect of the Invention]

Thus, with a picture display method according to the present invention and comprising a push-type content object downloading step of downloading a push-type content object according to push delivery and storing it in a predetermined region, an electronic document inputting step of downloading or otherwise inputting an electronic document for displaying a picture including a part obtained by the push-type content object according to push delivery or pull delivery, the electronic document describing in advance the push-type content object stored in the predetermined region by means of identification information on the predetermined region and identification information on the push-type content object and a picture displaying step of reading the push-type content object from the predetermined region according to the description of the electronic document and displaying the picture including the part obtained by the push-type content object, an operation of storing a push-type content object in a predetermined region and that of inputting an electronic document (including inputting by downloading) can be conducted separately and independently. Therefore, the time for storing a push-type content object and the time for inputting an electronic document (including inputting by downloading) can be selected appropriately by considering the volume of the push-type content object, the load of the server, the load of the communication line and so on.

### Brief Description of the Drawings

FIG. 1 is a schematic block diagram of a picture display system according to an embodiment of the present invention;
FIG. 2 is a schematic illustration of the sequence of operation of this embodiment, showing a method of downloading a push-type content object according to push delivery; and
FIG. 3 is a schematic illustration of the sequence of operation of this embodiment, showing a method of downloading a pull-type content object according to pull delivery.

### Explanation of Reference Symbols

- 101:: push-type content object server
- 102:: management server
- 103:: push proxy gateway
- 105:: pull-type content object server
- 107:: terminal
- 121:: content object folder
- 123:: WAP receiving section
- 125:: push-type content object downloading section
- 127:: user interface
- 129:: browser
- 131:: cache memory
- 133: 1: pull-type content object downloading section
- 135:: digital copyright management section
- 137:: non-downloaded-type content object inputting section

### Best Mode for Carrying Out the Invention

Now, the present invention will be described in terms of the best mode for carrying out the invention by referring to the accompanying drawings.

In this embodiment, a terminal generates a picture by means of an electronic document and the content object described there so as to display the picture. The terminal may be a portable telephone set, a personal computer, a PDA (personal digital assistant) or the like. The electronic document is a document such as an HTML document described in a markup language. The content object is a still picture, moving picture, character or the like. The electronic document is also a sort of content object. In the following description, electronic documents are included in content objects unless electronic documents are explicitly excluded or discriminated from other content objects even if electronic documents are not explicitly described. CCS (cascading style sheets) describing a layout are also a sort of content object. While a content object may output sounds, such a feature will be omitted from the following description unless noted otherwise.

### [Content object]

A folder for storing a content object for forming a picture (to be referred to as "content object folder" hereinafter) is provided in a memory in a terminal or a memory connected to a terminal. Apush-type content object downloaded according to push delivery is stored in the content object folder. A pull-type content object downloaded according to pull delivery or a non-downloaded-type content object input by a method other than downloading may be stored in the content object folder.

Downloading according to push delivery refers to downloading according to an opportunity produced by a server. For example, the server may typically be a management server, which will be described in greater detail hereinafter.

Downloading according to pull delivery refers to downloading according to an opportunity produced by a terminal.

A non-downloaded-type content object may be a still picture file or a moving picture file of one or more than one pictures picked up by the camera contained in a terminal, a sound file of sounds recorded by a microphone contained in a terminal, a content object input from a memory card inserted into a terminal or a content object input from some other device connected to a terminal.

### [Content object folder]

A terminal holds the corresponding relationship between directory information indicating the position of a content object folder and a predetermined denomination for indicating the content object folder (to be referred to as "content object folder name" hereinafter). With this arrangement, a content object in the content object folder can be identified by means of the combination of the content object folder name and identification information of the content object (e.g., file name). The content object folder name may be a mere description of the protocol name to be used for accessing the content object folder, for example, "vf://". The WEB browser installed in a terminal reads out a HTML document having a name of "idle.htm" that is located in a content object folder when "vf://idle.htm" is specified and a jpeg file having a name of "wallpaper.jpg" that is located in a content object when "vf//wallpaper.jpg'' is specified. The program for accessing a content object in content object folder refers to this corresponding relationship so that it can correctly recognize the content object folder.

The corresponding relationship between directory information indicating the position of a content object folder and the predetermined denomination for indicating the content object folder is shared by all the terminals of a same communication common carrier. With this arrangement, if different manufacturers and different types of machines employ different folders for routing, all the terminals of a same communication common carrier can recognize a content object folder without fail.

Additionally, by copying or moving a content object stored in a folder or a route directory other than a content object folder to a content object folder, the content object can be accessed by means of the combination of the content object folder name and the file name of the content object. It may be so arranged that a utility for copying or moving a content object in the folder specified by a user to a content object folder is installed in a terminal so that the content object may be copied or moved simply by specifying the folder where the content object to be copied or moved is located and the content object without specifying a content object folder as the destination of copying or moving. Then, there arises no mistaken destination of copying or moving.

**[Method and timing of downloading]**

A terminal downloads the content object to be included in a picture to be displayed asynchronously with the electronic document that operates as framework for the picture to be displayed. Particularly, a terminal may download the content object to be included in a picture to be displayed before downloading the electronic document that operates as framework for the picture to be displayed. For example, a management server grasps which electronic document and which content object are to be downloaded to which terminal so that once it recognizes that a certain electronic document and a certain content object are updated on the server, it transmits a short message including information necessary for a terminal to download the updated electronic document and the updated content object from contents server to a right terminal (a URL, etc.). Upon receiving the short message, the terminal downloads the electronic document and the content object from the contents server according to the information contained in the short message. This is a downloading operation according to push delivery when viewed as a whole. It may be so arranged that a management server does not transmit a short message immediately after grasping that a content object and the like are updated but waits after grasping them and do so when the time zone (e.g., at night or early in the morning) for which it is estimated or detected that the quantity of communication of the line is lower than a predetermined level comes. With this arrangement, a content object of a large volume can be downloaded to a terminal without applying a heavy load on the communication line. Additionally, it may be so arranged that a terminal does not download a content object immediately after receiving a short message but in the first standby state that comes after receiving the short message. Then, the downloading operation may be conducted only when the terminal is in a standby state during a time zone for which it is estimated or detected that the quantity of communication of the line is lower than a predetermined level.

An electronic document and each content object for forming a single picture to be displayed are generally updated separately. Therefore, the operation of downloading each of them is conducted independently and the downloading time may differ from operation to operation. In other words, if a content object showing news is updated frequently on the server, the content object will be downloaded frequently and independently.

### [Process from downloading to displaying]

A push proxy gateway 103 transmits the URL of a content object to be inserted into the picture to be displayed to a terminal 107 according to a directive from the management server, typically utilizing a short message. A downloading agent (push-type content object downloading section) 125 is installed in the terminal 107 and the downloading agent 125 downloads the content object from a content object server 101 according to the URL. The downloaded content object is stored in a content object folder 121 by way of a digital copyright management section 135. The content object stored in the content object folder 121 in this way can be identified by the combination (e.g., "vf://wallpaper.jpg") of a content object folder name (e.g., "vf://") and the file name of the content object (e.g., "wallpaper.jpg"). This combination is described in the electronic document and a browser 129 reads the content object from the content object folder 121.

When the content object is specified by the prior art describing method (by means of an URL) in the electronic document, the browser 129 downloads the content object from the WEB server 105 according to the URL. Therefore, the browser 129 can discriminate the content object stored in the content object folder 121 and the content object stored in the WEB server 105 by specifying the content object stored in the content object folder 121 not only by means of the content object file name but by means of the combination of the content object folder name and the content object file name. When a content object is specified by means of only the content object file name, it can be so interpreted that the position of the content object is specified by a relative address. For instance, if both the electronic document and the content object are stored in the content object folder 121 and only the content object file name is described in the electronic document, the content object stored in the content object folder 121 is accessed.

### [Standby picture and function menu picture (type of and timing of downloading contents)]

As for standby pictures, the most updated picture needs to be displayed even when the terminal is out of the service area. Therefore, an arrangement that the electronic document and the content object for forming a standby picture require to be updated, using a request to start displaying a picture as trigger, is not desirable in view of that there can be a situation where the terminal is in a radio wave environment where it cannot communicate when the request is issued. Therefore, it should be so arranged that the electronic document and the content object included in a picture to be displayed on a screen are updated before a request to start displaying a picture is issued. In other words, a terminal can download early the electronic document and the content object for forming a standby picture as push-type contents. However, an operation of downloading a content object that needs to be updated only rarely according to push delivery suffices to be executed in a time zone where the quantity of communication is small such as at night or early in the morning. Additionally, in order not to put a heavy load on the communication line an operation of downloading a content object having a large volume according to push delivery needs to be conducted in a time zone where the quantity of communication is small such as at night or early in the morning. On the other hand, an operation of downloading a content object of news and/or weather forecasts to be displayed in a standby picture according to push delivery needs to and can take place frequently because such a content object has a small volume.

The type of and the timing of downloading a content object for forming a function menu picture are same as those of a standby picture.

The electronic document that operates as framework for a standby picture describes a combination of a content object folder name and a still picture file name as information for identifying the still picture to be utilized as wallpaper for the standby picture. Therefore, the user can display the wallpaper he or she wants to utilize for a standby picture by copying or moving the file of the still picture the user want to utilize and using the file name described in the electronic document as the file name of the file of the still picture. However, the file of the still picture that the user wants to utilize as wallpaper may be stored in any folder with any arbitrary file name. Therefore, alternatively, a utility for selecting wallpaper may be installed in the terminal and the still picture may be copied or moved to the content object folder of the still picture file while the file name may be altered to a predetermined file name (e.g., "wallpaper.jpg") without specifying a content object folder as the destination of copying or moving and the file name of the still picture in the content object folder. With this arrangement, there arises neither mistaken destination of copying or moving nor mistaken still picture file name. The originating still picture file may be obtained from any place (e.g., from a camera or a server of a content object provider) and stored in any folder with any file name. Then, such a still picture file can be utilized as a still picture file of wallpaper by copying or moving it and altering the file name.

### [WEB menu picture (type of and timing of downloading contents)]

The type of and the timing of downloading a content object for forming an WEB menu picture are same as those of a standby picture. Particularly, a content object according to push delivery may be utilized as content object for forming an WEB menu picture in order to reduce the standby time from the time when the user operate for displaying an WEB menu picture to the time when the most updated WEB menu picture is displayed.

However, considering that the user will firstly display an WEB menu picture when accessing any of a variety of WEB pages, it may be so arranged that the most updated WEB menu picture is properly displayed only when the terminal is found within the service area. Therefore, a content object according to pull delivery may be utilized as content object for forming an WEB menu picture. With such an arrangement, again, a content object according to push delivery may be utilized for a content object having a large volume for forming an WEB menu picture and downloaded in a time zone where the quantity of communication is small such as at night or early in the morning so as not to put a heavy load on the communication line. Conversely, since the electronic document that operates as framework out of the content objects that form an WEB menu picture has a small volume, a content object according to pull delivery may always be utilized as electronic document.

When downloading according to pull delivery the folder (which may be a content object folder 121 or some other folder) for storing a pull-type content object may be regarded as cache memory of the type described above for the background art and it is determined if it is necessary to re-download the content object or not by means of either of the two above-described techniques for updating a cache memory so that the content object may be downloaded only when it is determined that it is necessary to do so.

Since the electronic document for forming an WEB menu picture has a small volume, the timing of downloading the electronic document according to pull delivery may be the time when the user requests to display an WEB menu picture.

On the other hand, one or more than one content objects having a large volume out of the content objects for forming an WEB menu picture may be downloaded at night or early in the morning according to pull delivery so as not to put a heavy load on the communication line.

Such an operation of downloading a content object according to pull delivery may be conducted by controlling the WEB browser from some other part of the terminal or according to the script described in the electronic document.

For example, the content object stored in the folder of a terminal can be maintained in the most updated state when it is so arranged that the terminal determines if the content object needs to be downloaded or not continuously in idle time and, if necessary, downloads the content object in idle time.

As a result of downloading a content object in idle time in this way, it is no longer necessary to download the content object when a request is made to start displaying a picture, using the request as trigger so that the time from the request to the display can be reduced.

As a method of downloading according to pull delivery, it may alternatively be so arranged that the terminal sends a downloading request to the management server 102 and the management server transmits a short message in response to the request so that the terminal downloads a content object according to the information described in the short message such as a URL. With this arrangement, the management server 102 may suspend or postpone the transmission of the short message when the load of the contents server and/or that of the communication line are heavy.

### [Advantages]

With the method of the prior art, when it is determined that an updated picture to be displayed needs to be downloaded, the electronic document for forming the picture to be display and all the content objects included in the picture to be displayed need to be downloaded from the server to the terminal in a short period of time to raise the momentary load of the server, that of the terminal and the momentary quantity of communication of the communication path enormously. When downloading requests are made from a large number of terminals at a time, the server may no longer properly function due to the overload and the communication path may become excessively congested.

To the contrary, with this embodiment, even if according to push delivery or pull delivery, instead of determining if an updated picture to be displayed needs to be downloaded or not, it is determined separately if each of the updated individual content objects and the updated electronic document needs to be downloaded or not individually and separately. It is determined sporadically in idle time if each of the updated individual content objects needs to be downloaded or not. It may be determined if the electronic document needs to be downloaded or not either sporadically in idle time or when a request for displaying the picture is made by the user. Therefore, it is no longer necessary to download all the content objects included in a picture to be displayed in a short period of time and hence any rise of the momentary load of the server, that of the terminal and the momentary quantity of communication of the communication path can be avoided. Additionally, the time from a request for displaying a picture to actually displaying picture is reduced.

### [System configuration]

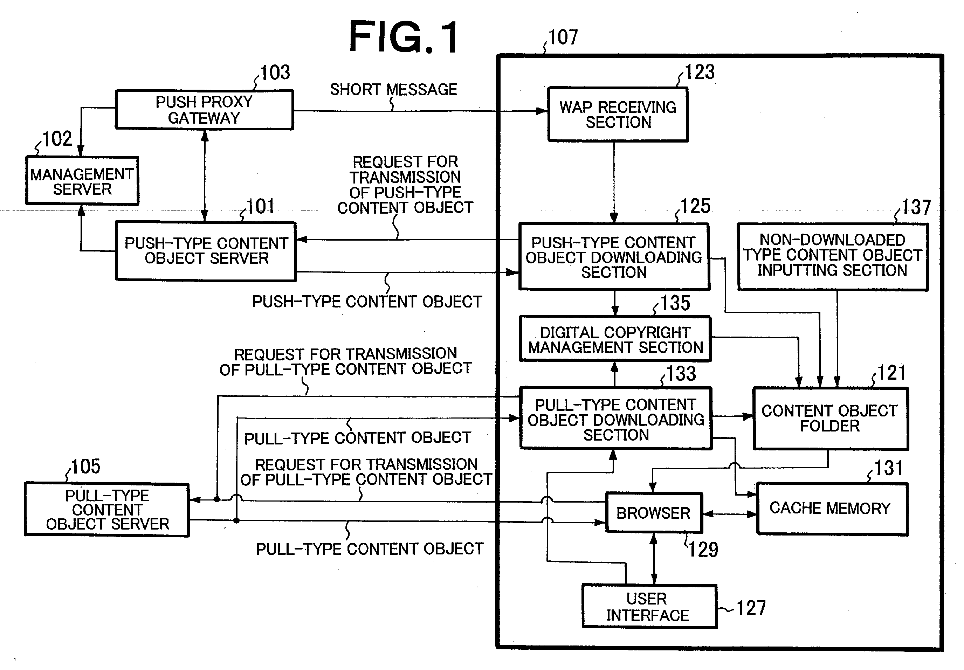

FIG. 1 is a schematic block diagram of a picture display system according to the embodiment of the present invention.

Referring to FIG. 1, the picture display system according to the present invention comprises a push-type content object server 101, a management server 102, a push proxy gateway 103, a pull-type content object server 105 and terminals 107.

The push-type content object server 101 stores various push-type content objects and downloads the push-type content object requested from a terminal 107.

The push proxy gateway 103 transmits a short message that triggers to have the terminal 107 download a push-type content object from the content object server 101 to the terminal 107. The short message includes the URL of the push-type content object.

The management server 102 monitors the update of any of the push-type content objects in the push-type content object server 101. Alternatively, the push-type content object server 101 may detect the update of any of the push-type content objects in it and notify the management server 102 of the update. The management server 102 may update a push-type content object and transmit a short message simultaneously.

Additionally, the management server 102 stores data indicating an updated push-type content object that is utilized in a certain terminal. The data is prepared at the time of designing the picture of each terminal 107. Therefore, when a push-type content object is updated, a short message for downloading the updated push-type content object is transmitted to all the terminals 107 that utilize it.

Since the content object is transmitted to the terminals 107 from the push-type content object server 101, using the short message transmitted to the terminals 107 as trigger from the push proxy gateway 103, the sequence of operation is that of a downloading operation according to push delivery as a whole. In this sense, the content object that is transmitted in this way is a push-type content object as described above.

A push-type content object is delivered by using a short message as trigger because the addresses of the short message are the telephone numbers of portable telephone sets and hence individual terminals 107 can be specified as destinations of delivery. Therefore, for example, if an individual terminal 107 can be specified by means of some other telephone number, an IP address of IPv6, a MAC address or an e-mail address, the delivery of a push-type content object may be started by using a message addressed to such an address as trigger. Alternatively, the push-type content object server 101 may spontaneously deliver a push-type content object, using information that can identify each of the addressed terminals 107, without using any auxiliary means such as short message.

The push proxy gateway 103 transmits a short message to a terminal 107 when the terminal 107 forms a predetermined picture (e.g., a standby picture) for the first time. To do this, the push proxy gateway 103 typically receives a request for the transmission from the management server 102.

The short message includes information for downloading the single push-type content object or all the plurality of push-type content objects included in a predetermined picture. A short message may be made to include information for downloading all the push-type content objects included in a predetermined picture. Alternatively, a short message may be made to include information for downloading part of the push-type content objects included in a predetermined picture (e.g., the group of content objects belonging to a theme) so that all the push-type content objects included in a predetermined picture may be covered by a plurality of short messages. A short message may be made to include information for downloading each of the push-type contents-objects included in a predetermined picture so that all the push-type contents-objects included in a predetermined picture may be covered by a plurality of short messages. When a short message is made to correspond to a push-type content object or a plurality of push-type content objects, a short message is made to correspond to a URL that includes the domain name of the push-type content object server 101. Then, the URL is made to correspond to a single push-type content object or a plurality of push-type content objects organized in a multi-part format.

When at least part of the push-type content objects for forming a picture of a terminal 107 is updated, the push proxy gateway 103 transmits a short message for causing the terminal 107 to download the push-type content object or push-type content objects. To do this, the management server 102 grasps the update of each of the push-type content objects.

It may alternatively be so arranged that, when a terminal 107 requests the management server 102, the management server 102 starts transmitting a short message, using the request as trigger. However, with such an arrangement, the management server 102 needs to use a filter for permission/prohibition or adjusting the time zones relative to requests from terminals 107.

The pull-type content object server 105 stores various pull-type content objects and allows a terminal 107 to download the pull-type content object requested from the terminal 107. Like push-type content objects, various pull-type content objects include electronic documents that operate as frameworks for pictures, still pictures, moving pictures, sounds, CSSs (cascading style sheets), characters and so on. Any of such content objects is also used to form a picture (e.g., an ordinary WEB picture) in a terminal 107.

While FIG. 1 shows only a single push-type content object server 101 and a single pull-type content object server 105. There may be a plurality of push-type content object servers 101 and a plurality of pull-type content object servers 105. At least a pull-type content object server 105 is a server for providing electronic documents that operate as frameworks for WEB menu pictures. The server is typically provided by the communication common carrier. The pull-type content object server 105 or each of the pull-type content object servers 105 may be an ordinary WEB server.

The content object folder 121 stores various push-type content objects, various pull-type content objects and various non-downloaded type content objects.

The content object folder 121 is basically arranged in a recording medium contained in the terminal 107, although it may alternatively be arranged in a recording medium connected to the terminal 107. Still alternatively, it may be arranged in any so-called directory or sub-directory of a file system.

Note, however, that a common header is employed among a plurality of terminals in order to access the content object folder 121. The scope of commonness includes all the terminals that operate under an agreement with a single communication common carrier in the narrowest sense of the words. Therefore, it is necessary to define information that associates the position information (e.g., directory information) of the content object folder 121 with the header. However, such information is defined at the time when the terminal 107 is manufactured or when the terminal 107 comes into agreement with a communication common carrier and hence the user is not required to define the information.

The header associated with the position information (e.g., directory information) of the content object folder 121 as described above is defined as protocol identification information such as "vf://" that the browser can discriminate from standard protocol identification information such as "http://", "ftp://" and "file://". According to the prior art, the browser can access a local file (in the terminal 107) when "files://" is utilized but a different directory has to be used as route directory depending on an operating system. In other words, the directory immediately under the operating system may be handled as route directory in an operating system, whereas the user directory may be handled as route directory in another operating system. Therefore, the conceived electronic document may not necessarily be accessed if "files://index/htm" is specified. To the contrary, with this embodiment, information for associating the position information (directory information) of the content object folder 121 with the header is defined in each of the terminals within a common scope (e.g., the scope of a communication common carrier) so that the electronic document idex.htm in the content object folder 121 can be accessed without fail by specifying the combination (e.g., "vf//index.htm") of a header (e.g., "vf://") and a content object name (e.g., "index.htm").

The push-type content object downloading section 125, the pull-type content object downloading section 133 and the non-downloaded type content object inputting section 137, which will be described in greater detail hereinafter, can access a content object in the content object folder 121 by means of the header and the content object name, utilizing the information associating the position information of the content object folder 121 with the header. For example, "vf.//index.htm" may be specified when it is desired to store the electronic document index.htm in the content object folder 121.

A sub-folder may be provided under the content object folder 121 and it may be so arranged that a content object in the sub-folder can be specified by a relative specifying method that employs the content object folder 121 as reference. For example, the electronic document index.htm in the sub-folder sub1 immediately under the content object folder 121 is accessed by "vf://sub1/index.htm".

A plurality of sub-folders may be provided under the content object folder 121 and it may be so arranged that any sub-folder may be utilized as it is specified by the user and the sub-folder is handled as if it were the content object folder 121. For example, sub-folder sub1 and sub-folder sub2 are provided immediately under the content object folder 121. Then, if the sub-folder sub1 is selected and "vf://index.htm" is specified, "vf://sub1/index.htm" will be actually accessed. For example, a plurality of sub-folders may be provided for each theme and a common content object name may be put to a same element in a page. Then, a sub-folder that corresponds to a favorite theme may be specified for a season. The theme may be an animation character or a motif selected from a number of animation characters or motifs (Japanese motif, a western motif, a natural tone motif and so on), whichever appropriate, that are provided in advance. With this arrangement, it is no longer necessary to specify a sub-folder for each content object within the favorite theme.

When a content object is specified only by the denomination of the main body thereof (without any extension) in an operation of reading out a content object from the content object folder 121, the content objects whose main bodies carry a same denomination may be searched out according to the order of arrangement of the extensions specified in advance and the content object that is detected first may be read out. For example, the order of arrangement of the extensions specified in advance may be "bmp" → "jpg" → "gif' and, when "wallpaper" is specified, content objects are searched out in the order of "wallpaper.bmp" → "wallpaper.jpg" → "wallpaper.gif". Then, if "wallpaper.jpg" is detected first, it is read out and a still picture is restored by means of the decoder that corresponds to it. With this arrangement, the format of still pictures that the user wants to utilize as wallpaper of the standby picture can be selected freely from a predetermined range. The user can specify the order of priority Of course, the user can alternatively specify a specific extension. Additionally, it may be so arranged that the user specifies the order of arrangement or a particular extension in the course of interactively defining the WEB page for the standby picture of the user.

When the content objects in the content object folder 121 are referred to from the electronic document in the content object folder 121, a relative specifying method may be utilized without putting any header. For example, when the still picture content object fish.jpg in the sub-folder sub1 under the content object folder 121 is referred to from the electronic document index.htm in the content object folder 121, it can be specified by "sub1/fish.jpg".

The WAP receiving section 123 receives a short message and executes a process relating to a WAP. Then, it outputs information necessary to download the push-type content object in the short message (such as the URL of the push-type content object) to the push-type content object downloading section 125.

The push-type content object downloading section 125 downloads the push-type content object from the push-type content object server 101 on the basis of the information input from the WAP receiving section 123 and stores it in the content object folder 121. The push-type content object downloading section 125 may download the push-type content object immediately after receiving the information for downloading the content object from the WAP receiving section 123 as input. However, alternatively, it may postpone the downloading operation until the time when the load of the terminal 107 is reduced, the time when the any of communication of the terminal 107 is reduced and/or the time when the radio wave condition is improved.

The user interface 127 includes a key group, a display section, a microphone, a speaker and a control section for controlling them. It conveys the input or the request from the user to the various sections of the terminal 107 and outputs information from the various sections.

The browser 129 generates a video data for displaying the picture requested by the user on the basis of the electronic document that corresponds to the picture and the content objects linked to the electronic document and outputs the data to the display section. When content objects of an audio file are linked from the electronic document, it outputs an audio signal to the speaker.

The browser 129 can display an WEB picture on the basis of the electronic document read out from the content object folder 121 or on the basis of the electronic document downloaded from the pull-type content object server 105. It can also temporarily store the electronic document downloaded from the pull-type content object server 105 in the cache memory 131 and then reads it out from the cache memory 131 so as to display an WEB picture on the basis of the electronic document it reads out. When the browser 129 utilizes the cache memory 131, it may also utilize the updating technique described above for the

### background art.

Additionally, when a content object that is stored in the content object folder 121 is described in the electronic document, the browser 129 access the content object stored in the content object folder 121 regardless where the electronic document is input from. So does the browser 129 relative to a content object to be stored in the content object folder 121. Similarly, when a pull-type content object that is stored in the pull-type content object server 105 is described in the electronic document, the browser 129 downloads the pull-type content object from the pull-type content object server 105 regardless where the electronic document is input from. The plug-in on the browser 129 can freely switch the access target for a content object according to the description in the electronic document as in the case of the browser 129.

When the script for downloading the updated version of a push-type content object that is stored in the content object folder 121 from the push-type content object server 101 is described in the electronic document, the updated version of the push-type content object is downloaded from the push-type content object server 101 according to the description. Similarly, the script for downloading the updated version of a push-type content object that is stored in the content object folder 121 from the pull-type content object server 105 is described in the electronic document, the updated version of the push-type content object is downloaded from the pull-type content object server 105 according to the description. In such a case, the content object has properties of the push-type and also those of the pull-type.

The description of the above paragraph also applies to a content object stored in the content object folder 121 firstly as pull-type content object or non-downloaded type content object.

The cache memory 131 is provided so as to be utilized by the browser 129 and similar to a cache memory to be used by a browser of the prior art. In short, the browser 129 temporarily stores a pull-type content object in the cache memory 131 and updates it like an ordinary browser does.

The pull-type content object downloading section 133 downloads a pull-type content object from the pull-type content object server 105 and stores it in the content object folder 121. The pull-type content object downloading section 133 operates in this way typically when it is requested by the user to download the pull-type content object by way of the user interface 127.

The digital copyright management section 135 executes processes for copyright management relative to push-type content objects that require copyright management and pull-type content objects that require copyright management. Such processes typically include an accounting process and a process for authorizing utilization of a content object within a predetermined scope. It executes such processes in cooperation with a digital copyright management server (not shown). A process for authorizing utilization of a content object within a predetermined scope may typically include decrypting the content object by means of a decryption key, authorizing/prohibiting decryption of a content object when utilization of the content object is requested and/or restoring a decrypted content object.

The non-downloaded type content object input section 137 stores non-downloaded type content objects in the content object folder 121.

### [Downloading according to push delivery]

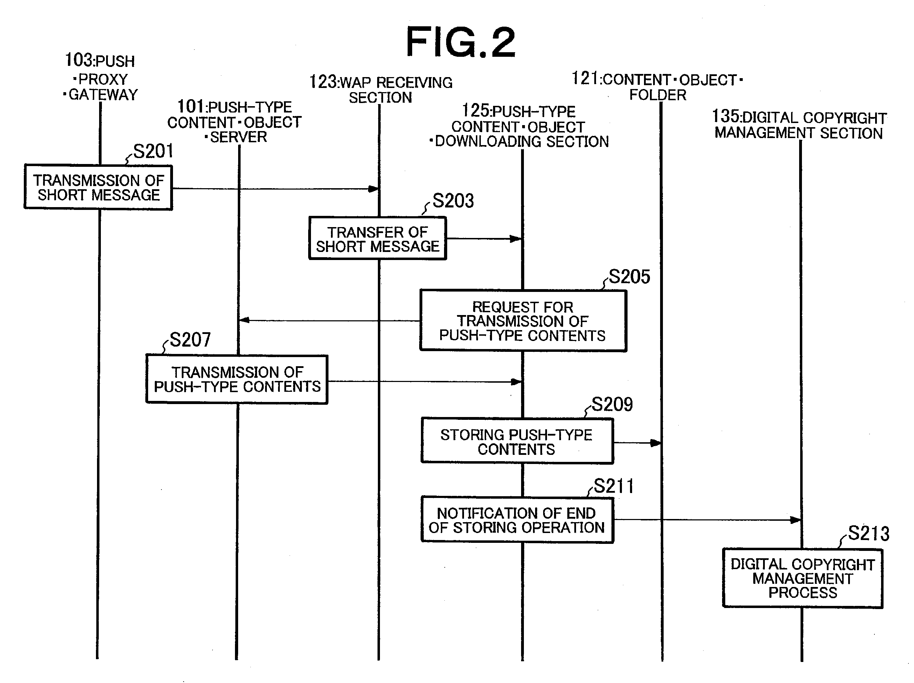

Now, a method of downloading a push-type content object according to push delivery will be described below by referring to FIG. 2.

Firstly, the push proxy gateway 103 transmits a short message to the WAP receiving section 123 (Step S201).

Then, the WAP receiving/processing section 123 executes a process relating to a WAP as described above on the short message transmitted in Step S201 and outputs information necessary for downloading the push-type content object in the short message (the URL of the push-type content object or the like) to the push-type content object downloading section 123 (Step S203).

Thereafter, the push-type content object downloading section 125 transmits a request of transmission of the push-type content object to the push-type content object server 101 on the basis of the information input from the WAP receiving section 123 (Step S205).

In response to the request, the push-type content object server 101 transmits the requested push-type content object to the push-type content object downloading section 125 (Step S207).

Subsequently, the push-type content object downloading section 125 stores the push-type content object transmitted in Step S207 in the content object folder 121 (Step S209). The directive for storing the push-type content object immediately under the content object folder 121 or in one of the sub-folders under the content object folder 121 may be contained in the short message or given by the user.

Then, if the downloaded push-type content object requires digital copyright management, the push-type content object downloading section 125 notifies the digital copyright management section 135 of that the operation of storing the push-type content object has ended (Step S211).

In response to the notification, the digital copyright management section 135 executes processes that needs to be executed in the initial stages (e.g., the process at the terminal side of the accounting process, the process of downloading the decryption key, the process of downloading information on the scope of licensing, etc.) out of the processes for digital copyright management (Step S213).

However, it may alternatively be so arranged that, when the push-type content object downloading section 125 ends the operation of receiving the push-type content object transmitted in Step S207, it notifies the digital copyright management section 135 of the fact of ending the receiving operation and, in response, the digital copyright management section 135 executes the processing operation of Step S213 before the push-type content object downloading section 125 executes the processing operation of Step S211 of storing the push-type content object.

### [Downloading according to pull delivery]

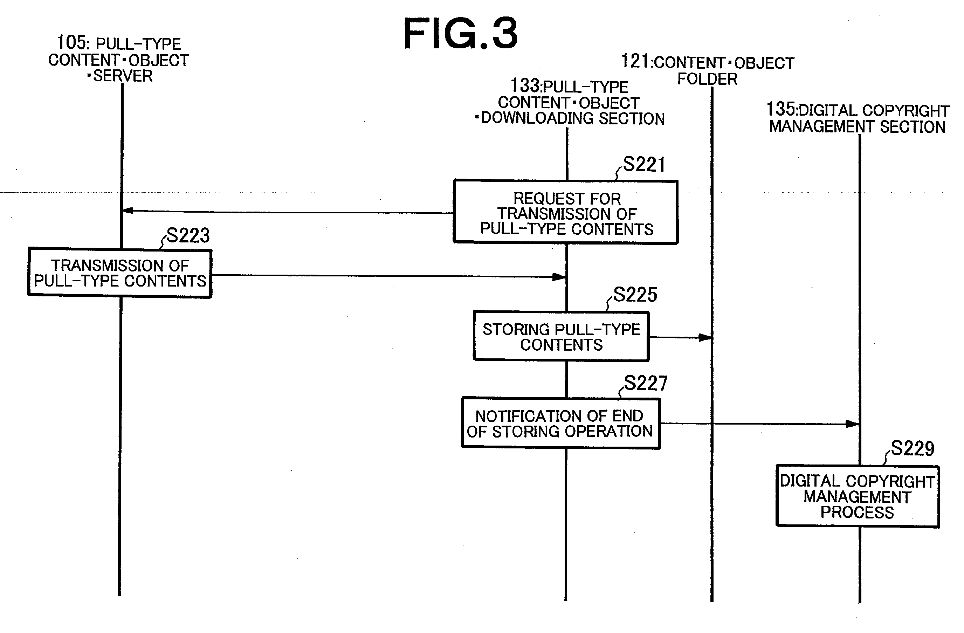

Now, a method of downloading a pull-type content object according to pull delivery will be described below by referring to FIG. 3.

Firstly, the pull-type content object downloading section 133 transmits a request of transmitting a specific pull-type content object to the pull-type content object server 105 (Step S221).

Then, in response, the pull-type content object server 105 transmits the requested pull-type content object to the pull-type content object downloading section 133 (Step S223).

Thereafter, the pull-type content object downloading section 133 stores the pull-type content object transmitted in Step S223 in the content object folder 121 (Step S225). The directive for storing the pull-type content object immediately under the content object folder 121 or in one of the sub-folders under the content object folder 121 may be contained in the short message or given by the user. Step S225 may be omitted. The pull-type content object may be stored in the cache memory 131 without executing the processing operation of Step S225.

Then, if the downloaded pull-type content object requires digital copyright management, the pull-type content object downloading section 133 notifies the digital copyright management section 135 of that the operation of storing the pull-type content object has ended (Step S227).

In response to the notification, the digital copyright management section 135 executes processes that needs to be executed in the initial stages (e.g., the process at the terminal side of the accounting process, the process of downloading the decryption key, the process of downloading information on the scope of licensing, etc.) out of the processes for digital copyright management (Step S229).

However, it may alternatively be so arranged that, when the pull-type content object downloading section 133 ends the operation of receiving the pull-type content object transmitted in Step S223, it notifies the digital copyright management section 135 of the fact of ending the receiving operation and, in response, the digital copyright management section 135 executes the processing operation of Step S229 before the pull-type content object downloading section 133 executes the processing operation of Step S227 of storing the pull-type content object.

If necessary, the browser 129 also downloads a pull-type content object from the pull-type content object server 105 like the pull-type content object downloading section 133. Normally, the pull-type content object downloaded by the browser 129 is not stored in the content object folder 121, it may alternatively be stored in the content object folder 121. For the pull-type content object downloaded by the browser 129 to be stored in the content object folder 121, a script may be described in the electronic document for that. When a pull-type content object is not stored in the content object folder 121, it may be stored in the cache memory 131.

### [Detail of standby picture]

Now, the standby picture that is displayed in the display section of the terminal 107 will be described below.

In this embodiment, the standby picture is generated by means of the browser 129 and displayed on the display section. A standby picture normally needs to display the radio wave condition and the remaining power of the battery It will be convenient when a digital clock or an analog clock, a weather forecast and the latest news are displayed in the standby picture. Additionally, it will also be convenient that one or more objects (characters and/or icons) that are linked to a favorite image to be displayed are also displayed in the standby picture. In order to display them, the browser 129 inputs the electronic document and a content object linked to the electronic document. The positional arrangement of these objects is specified by means of a CSS. In short, the radio wave condition, the remaining power of the battery, the wallpaper, a digital clock or analog clock, a weather forecast, the latest new, a CSS and objects linked to a favorite picture to be displayed are displayed by means of the content objects corresponding to them.

For example, when displaying the radio wave condition, a signal representing the radio wave condition is input from a function section for detecting the radio wave condition (not shown) and the radio wave condition is displayed on the basis of the signal by means of the script for displaying a chart showing a radio wave condition (a sort of content object). The script may be provided as a push-type content object.

When displaying the remaining power of the battery, a signal representing the remaining power of the battery is input from a function section for detecting the remaining power of the battery (not shown) and the remaining power of the battery is displayed on the basis of the signal by means of the script for displaying a chart showing the remaining power of a battery (a sort of content object). The script may be provided as a push-type content object.

When displaying the wallpaper, a still picture file (a sort of content object) or a moving picture file (a sort of content object) that provides a basis for displaying a wallpaper is utilized. Such a still picture file or a moving picture file may be provided as a push-type content object.

When displaying a digital clock or an analog clock, a signal representing the current clock time is input from the clock section (not shown) and a digital clock or an analog clock is displayed on the basis of the signal by means of a script for displaying a chart or a numerical value showing the current clock time (a sort of content object). The script may be provided as a push-type content object.

When displaying a weather forecast, weather forecast information is downloaded from the weather forecast delivery server (not shown) and the weather forecast is displayed by means of a script for displaying a chart showing a weather forecast (a sort of content objects). The weather forecast information may be provided as a push-type content object. Alternatively, a chart showing the weather forecast content may be downloaded from the weather forecast delivery server and displayed. Such weather forecast information or a chart for displaying a weather forecast content may be provided as a push-type content object.

When displaying latest news, the news information is downloaded from the news delivery server (not shown) and the news is displayed by means of a script for displaying news information in characters (a sort of content object). News information is also a sort of content object. The news information may be provided as a push-type content object.

SVG (scalable vector graphics) data including a character string of news may be utilized as push-type content object representing news information.

A link object for displaying a favorite picture is displayed by means of an electronic document that includes the URL of the picture to be displayed and the object linked to the URL (which is an electronic document called from the electronic document for forming the frame of the entire standby picture and a sort of content object). The electronic document may be provided as a push-type content object. As preparation for the display, information relating to the favorite picture is interactively transmitted from the terminal to the server and the electronic document is generated by the server and stored in the push-type content object server 101. Alternatively, the terminal 107 may be provided with an application program for generating such an electronic document on the basis of the information relating to the favorite picture that is input from the user and storing it in the content object folder 121 as a non-downloaded type content object.

A CSS is for realizing the layout of a standby picture that is designed interactively and may also be provided as a push-type content object.

In this embodiment, the content object for forming a standby picture may be a push-type content object, a pull-type content object or a non-downloaded type content object.

However, basically, a push-type content object is utilized as content object for forming a standby picture and stored in the content object folder 121. Any terminal 107 is adapted to provide the browser 129 with a same denomination for the electronic document for forming the framework of a standby picture (e.g., "vf//idle.htm"). Then, the electronic document describes the content object stored in the content object folder 121 as the content object for obtaining the part to be displayed and included in the standby picture. For example, the electronic document may describe a script file name "vf://rfstrengrh.js" as the denomination of the content object for obtaining the part to be displayed for the radio wave condition and included in the standby picture. Note that "js" is an extension of Java Script ("Java" being a tradename) but the script may be written in some other language.

By doing so, the browser 129 can display the standby picture on the basis of the electronic document so long as the electronic document for forming the framework of the entire standby picture is stored in the content object folder 121 with the denomination of "idle.htm" regardless if the electronic document is a push-type content object, a pull-type content object or a non-downloaded type content object.

Additionally, the browser 129 can display the content object for obtaining the part to be displayed for the radio wave condition and included in the standby picture so long as the content object is stored in the content object folder 121 with the denomination of "rfstrength.js" regardless if the content object is a push-type content object, a pull-type content object or a non-downloaded type content object.

For example, if the browser 129 stores the content object necessary for displaying a basic standby picture in the content object folder 121 at the time of shipment from the manufacturing factory, the user who purchases the terminal 107 can immediately see the standby picture.

Alternatively, if the user requests a sales person of the terminal 107 sales shop to have the management server 102 transmit a short message by way of a simple operation, the content object necessary for the browser 129 to display a basic standby picture (including an electronic document) is subsequently stored in the content object folder 121 by means of the method of downloading a push-type content object according to push delivery as described above by referring to FIG. 2 and the user who purchased the terminal 107 can immediately see the standby picture.

The user may not be satisfied by a basic standby picture and want to have a customized standby picture. To meet such a demand, it may be so arranged that the user can transmit information necessary for customizing a standby picture (standby picture customizing information) to the management server 102 by way of the terminal 107 or the personal computer on the interactive picture displayed and provided by the management server 102 or a server that cooperates with the management server 102. Then, the management server 102 selects push-type content objects necessary for forming a customized standby picture on the basis of the standby picture customizing information. Subsequently, a short message relating to the necessary push-type content objects is transmitted according to a directive from the management server 102. Then, the push-type content objects (including an electronic document) necessary for the browser 129 to form a customized standby picture are stored in the content object folder 121 by means of the method of downloading a push-type content object according to push delivery as described above by referring to FIG. 2. Then, the user can see the customized standby picture.

The customization is realized by way of a combination of a degree of richness, a layout and a theme. A degree of richness is the degree of utilization of a large volume content object (e.g., an image content object). In other words, a standby picture that uses various images has a high degree of richness, whereas a standby picture that seldom uses image pictures or totally unutilize a picture has a low degree of richness. A layout is realized by combining an individual character string or character strings and a position, a size and a scope of an image or positions, sizes and scopes of images. The theme is already described above.

Alternatively, a large number of customizable standby picture may be prepared in advance so that the user may select one of them. A list of content objects that can display standby pictures may be displayed on an interactive picture displayed for customization (e.g., a picture including a form) and provided by the management server 102 or a server that cooperates with the management server and only the content object selected by the user may be displayed as the standby picture. The layout and other factors of the customized picture are described by means of a CSS that is a content object.

The user may want to change only a content object (e.g. wallpaper) that is a part of the standby picture. To meet such a demand, it may be so arranged that the image file that the user wants to utilize for the wallpaper can be stored in the content object folder 121 by the non-downloaded type content object input section 137. It may alternatively be so arranged that the image file that the user wants to utilize for the wallpaper can be downloaded from the pull-type content object server 105 and stored in the content object folder 121 by the pull-type content object downloading section 133. In either case, since at least the main body part of the denomination of the content object to be utilized for the wallpaper is already determined, the non-downloaded type content object inputting section 137 or the pull-type content object downloading section 133 changes at least the main body part of the denomination of the image file to the determined one.

Alternatively, the image file that the user wants to utilize for the wallpaper may be downloaded from the push-type content object server 101 and stored in the content object folder 121 by the push-type content object downloading section 125. To do this, it may be so arranged that the user can select a wallpaper he or she likes from a plurality of wallpapers prepared in advance on an interactive picture provided by the management server 102 or a server that cooperates with the management server (e.g., a picture including a form) and transmit information for identifying it (wallpaper identifying information) to the management server by way of the terminal 107 or the personal computer. Subsequently, a short message relating to the image file selected by the user is transmitted according to the directive from the management server 102. Then, the image file selected by the user is stored in the content object folder 121 by means of the method of downloading a push-type content object according to push delivery as described above by referring to FIG. 2. Thereafter, the image file selected by the user is displayed in the standby picture.

Content objects of some sort or another may be updated. For example, weather forecast information and news information will be updated in every predetermined time period. A script for displaying a certain picture may be versioned up. In order to automatically reflect such an update of a content object to the terminal 107, the content object is categorized as a push-type content object and the management server 102 that recognizes an update of a push-type content object requests the push proxy gateway 103 to transmits a short message to all the terminals 107 in order to download the push-type content object to the terminals 107 that includes a standby picture.

A script for updating the push-type content object downloaded from the push-type content object server 101 by periodically downloading it from the push-type content object server 101 or the pull-type content object server 105 may be buried in the electronic document for forming the entire standby picture and called from the electronic document for forming the entire standby picture as a content object. Since the terminal 107 is in a standby state for most of the time, the browser 129 executes the content object of the standby picture for most of the time. Therefore, the push-type content object can be downloaded from the push-type content object server 101 or the pull-type content object server 105 and updated by means of such a script for updating without any short message.

When a theme is selected, a group of images belonging to the theme is utilized by the standby picture. Such a group of images is downloaded from the push-type content object server 101 to the terminal 107 in a multipart format and divided into individual images by the terminal before they are stored in the content object folder 121.

The user may not always select a same theme and may change the theme. To cope with such a situation, it is so arranged that a group of images for the new theme is downloaded from the push-type content object server 101 to the terminal 107 as in the case of initially customizing a standby picture. When simply the theme is changed, only the group of image is changed and all the other content objects for forming the standby picture are not changed. Thus, while the images that are utilized in respective positions of the standby picture differ before and after an update, the image file name remains same. Such a situation can be handled simply by overwriting the group of images of the existing theme with the group of image of the new theme. However, such a handling technique is not user-friendly. Thus, a plurality of sub-folders may be arranged under the content object folder 121 for respective themes and the group of images of each theme may be stored in the corresponding one of the sub-folders. The user can freely select the theme he or she wants to utilize. Then, the group of images of the selected theme is read out from the sub-folder that corresponds to the selected theme.

For the above-described arrangement, in addition to the groups of images of different themes, content objects that are common to all the themes are stored in a sub-folder. Then, the standby picture that corresponds to the selected theme can be displayed simply by reading out the electronic document for forming the entire standby picture from the selected sub-folder without requiring any additional process for recognizing the position of the linked content object. Alternatively, only the groups of images that are different from each other for respective themes are stored in sub-folders. With this arrangement, the browser 129 is made to recognize the sub-folder that corresponds to the selected theme and read out the group of images in the linked sub-folder.

Thus, since the content objects for forming a standby picture are basically downloaded by means of the method of push delivery so that the terminal 107 can maintain the standby picture in the most updated state. If the terminal 107 has temporarily moved out of the service area, the standby picture can be displayed by means of the push-type content objects that are downloaded immediately before moving out of the service area. Additionally, when the terminal 107 has temporarily moved out of the service area, the most updated push-type content objects can be downloaded by retransmitting the short message after the return to the service area of the terminal 107.

As the management server 102 transmits the short message in a time zone when the quantity of communication is small, the influence of downloading push-type content objects on other communications and talks can be minimized.

Meanwhile, a user who has the ability of preparing and editing content objects or a user who obtained content objects by way of a certain route or another may wants to utilize the content objects he or she prepared and edited or obtained, whichever appropriate, to customize the standby picture. In such a case, the content objects are handled as non-downloaded type content objects and stored in the content object folder 121. Such content objects are partly added to the existing push-type content objects or the existing pull-type content objects so as to correspond to additional contents. Some of such content objects may replace push-type content objects or pull-type content objects. Such content objects may include the script that the user wrote him- or herself for weather forecast. A non-downloaded type content object that replaced a push-type content object or a pull-type content object has identification information same as the replaced content object. Then, it is handled as an object of automatic updating and overwritten by a downloaded content object. In order to avoid such a situation, a special sub-folder may be arranged under the content object folder 121 as in the case where sub-folders are arranged for respective themes and the special sub-folder may be excluded from the objects of automatic updating so that content objects that should not be automatically updated can be stored in the special sub-folder. Alternatively, a list of the content objects included in the standby picture may be displayed and the user may be allowed to selectively permit/prohibit automatic updating of each of the content objects. Then, the push-type content object downloading section 125, the pull-type content object downloading section 133 and the browser 129 determine if any one of the content objects is to be downloaded or not according to the information on the permissions/prohibitions. Still alternatively, the user may be allowed to selectively permit/prohibit downloading each of the content objects stored in the special sub-folder.

### [Content objects for forming standby picture or function menu picture]

The content objects for forming a standby picture include an electronic document, a CSS, an image (a still image or a moving image), a sound, texts and scripts. These contents are stored in the content object folder 121.

While each content object is basically a push-type content object, it may be replaced by a non-downloaded type content object. A pull-type content object or a non-downloaded type content object representing a content may be stored in the content object folder 121 as a content object for forming a standby picture in addition to push-type content objects. While content objects are downloaded initially according to push delivery, subsequently, push/pull-type content objects downloaded according to pull delivery by means of a script may be stored in the content object folder 121 as content objects for forming a standby picture.

Push-type content objects are initially automatically downloaded under the initiative of the management server 102. When a content object is updated by the push-type content object server 101, it is automatically downloaded under the initiative of the management server 102.

Push/pull-type content objects are downloaded only initially under the initiative of the management server 102. From the second time and on, push/pull-type content objects are downloaded from the pull-type content object server 105 by the browser 129 according to a script.

An electronic document described the position in the content object folder 121 of the content object stored in the content object folder 121 but does not describe the destination to which it is downloaded. This is true not only for pull-type content objects but also for pull-type content objects. Therefore, a pull-type content object stored in the content object folder 121 is downloaded by the pull-type content object downloading section 133 that grasps the destination to which it is downloaded or the browser 129 that executes the script including the specified destination of downloading.

The non-downloaded type content object that replaces a push-type content object has identification information same as the push-type content object. Therefore, it will be automatically updated by a push-type content object stored in the push-type content object server 101 under the initiative of the management server 102 if nothing is done to it. In order to avoid such a situation, the non-downloaded type content object may be stored in a sub-folder where automatic updating is prohibited and information for prohibiting automatic updating may be held by the terminal for each content object so that the push-type content object downloading section 125 can refer to it.

An added non-downloaded type content object (a non-downloaded type content object that the management server 102 does not grasp) is not updated by an automatically downloaded content object without any measure for prohibiting downloading.

The type of content objects for forming a function menu picture and the process for handling such content objects are same as those described above for content objects for forming a standby picture and hence will not be described any further below.

### [Content objects for forming an WEB menu picture]

The content objects for forming an WEB menu picture include an electronic document, a CSS, an image (a still image or moving image), a sound, texts and scripts. All the contents may be stored in the content object folder 121. If such is the case, in the electronic document for forming the framework of the WEB menu picture, the content object describes the identification information of the content object folder 121 and the position where the identification information of the content objects is located. Particularly, the push type content objects stored in the content object folder 121 can be downloaded according to push delivery under the initiative of the management server 102.

However, of the content objects for forming an WEB menu picture, those that may well not be downloaded when the terminal is out of the service area are not necessarily push-type content objects that are stored in the content object folder 121 and may instead be downloaded each time a request for displaying an WEB menu picture is made. Furthermore, instead of being downloaded each time a request for displaying an WEB menu picture is made, they may be temporarily be stored in the cache memory 131 and appropriately updated by the above-described updating method. The position where such a content object is located is described in the electronic document for forming the WEB menu picture in terms of the URL including the server domain name of the pull-type content object server 105. The electronic document for forming the framework of the WEB menu picture itself may be a pull-type content object. If such is the case, the position where the electronic document is located is described in terms of the URL including the server domain name of the pull-type content object server 105.

However, if a content object of the content objects that may well not be downloaded when the terminal is out of the service area out of the content objects for forming an WEB menu picture has a large volume, it is preferably a push-type content object stored in the content object folder 121. With this arrangement, the content object having a large volume is stored in the content object folder 121 before a request for displaying an WEB menu picture is made and, when a request for displaying an WEB menu picture is made, the WEB menu picture can be displayed instantaneously by using the content object. Such a content object is described in the electronic document for forming the framework of the WEB menu picture by identification information of the content object folder 121 and the identification information of the content object.

All the methods that the sections shown in FIG. 1 utilize can be realized by causing a computer to read a program for executing the methods and causing it to actually execute them.

### Industrial Applicability

The present invention can find applications in the field of pictures to be displayed on portable telephone sets.

## Claims

1. A picture display method comprising:
a push-type content object downloading step of downloading a push-type content object according to push delivery and storing said push-type content object in a predetermined region;
an electronic document inputting step of downloading according to push delivery or pull delivery or otherwise inputting an electronic document for displaying a picture including a part obtained by said push-type content object, said electronic document describing in advance said push-type content object stored in said predetermined region by means of identification information on said predetermined region and identification information on said push-type content object; and
a picture displaying step of reading said push-type content object from said predetermined region according to the description of said electronic document and displaying said picture including said part obtained by said push-type content object.

2. The method according to claim 1,
wherein the downloading according to push delivery is executed before a display of said picture is requested.

3. The method according to claim 1,
wherein the downloading according to push delivery is executed when said push-type content object is updated on a server.

4. The method according to claim 1,
wherein the downloading according to push delivery is executed in an idle time of a terminal.

5. The method according to claim 1,
wherein the downloading according to push delivery is executed in a time zone when quantity of communication is small.

6. The method according to claim 1,
wherein said identification information on said predetermined region is explicit information or null information if said electronic document is also stored in said predetermined region.

7. The method according to claim 1, further comprising:
a pull-type content object downloading step of downloading a pull-type content object according to pull delivery and storing said pull-type content object in said predetermined region,
wherein said electronic document is for displaying a picture including a part obtained by said pull-type content object, said electronic document describing in advance said pull-type content object stored in said predetermined region by means of identification information on said predetermined region and identification information on said pull-type content object, and
wherein said picture displaying step is adapted to read said pull-type content object from said predetermined region according to the description of said electronic document and displaying said picture including said part obtained by said pull-type content object.

8. The method according to claim 1, further comprising:
a non-downloaded type content object storing step of storing a non-downloaded type content object input by means of a method other than downloading in said predetermined region,
wherein said electronic document is for displaying a picture including a part obtained by said non-downloaded type content object, said electronic document describing in advance said non-downloaded type content object stored in said predetermined region by means of identification information on said predetermined region and identification information on said non-downloaded type content object, and
wherein said picture displaying step is adapted to read said non-downloaded type content object from said predetermined region according to the description of said electronic document and displaying said picture including said part obtained by said non-downloaded type content object.

9. The method according to claim 1,
wherein said electronic document is for displacing a picture including a part obtained by a pull-type content object downloaded according to pull delivery,
wherein said electronic document describes in advance said pull-type content object according to identification information on a position on a network where said pull-type content object exists and identification information on said pull-type content object,
wherein the method further comprises a step of downloading said pull-type content object according to pull delivery from said position on the network in accordance with the description of said electronic document, and
wherein said picture displaying step is adapted to display said picture including said part obtained by said pull-type content object.

10. The method according to claim 1,
wherein the downloading according to push delivery is started in response to reception by a terminal of a message for downloading.

11. The method according to claim 10,
wherein said message is transmitted to said terminal when said push-type content object is updated under control of a management server that manages both the update of said push-type content object and the transmission of said message, a management server that receives a report of the update of said push-type content object or a management server that monitors the update of said push-type content object.

12. The method according to claim 10,
wherein said message includes identification information on a position on a network where said push-type content object exists and identification information on said push-type content object.

13. The method according to claim 1,
wherein said predetermined region includes a plurality of regions for a picture of a same category,
wherein said push-type content object downloading step is adapted to store said push-type content object at least in a selected one of said plurality of regions, and
wherein said picture displaying step is adapted to read said push-type content object from the selected one of said plurality of regions.

14. The method according to claim 13,
wherein at least a part of the content object stored in a specific region among said plurality of regions is excluded from a target of the downloading according to the push delivery.

15. The method according to claim 13,
wherein said push-type content object having same identification information is stored in each of said plurality of regions, and
wherein said picture displaying step is adapted to read said push-type content object having a same identification information from a selected one of said plurality of regions according to the description of said electronic document.

16. The method according to claim 1, further comprising:
a corresponding relationship holding step of holding the corresponding relationship between directory information of said predetermined region and information indicating that said predetermined region specified,
wherein said corresponding relationship is referred to when storing said push-type content object in said predetermined region and when reading said push-type content object from said predetermined region.

17. A picture display apparatus comprising:
push-type content object downloading means for downloading a push-type content object according to push delivery and storing said push-type content object in a predetermined region;
electronic document inputting means for downloading according to push delivery or pull delivery or otherwise inputting an electronic document for displaying a picture including a part obtained by said ush-type content object, said electronic document describing in advance said push-type content object stored in said predetermined region by means of identification information on said predetermined region and identification information on said push-type content object; and
picture displaying means for reading said push-type content object from said predetermined region according to the description of said electronic document and displaying said picture including said part obtained by said push-type content object.

18. The apparatus according to claim 17,
wherein the downloading according to push delivery is executed before a display of said picture is requested.

19. The apparatus according to claim 17,
wherein the downloading according to push delivery is executed when said push-type content object is updated on a server.

20. The apparatus according to claim 17,
wherein the downloading according to push delivery is executed in an idle time of a terminal.

21. The apparatus according to claim 17,
wherein the downloading according to push delivery is executed in a time zone when quantity of communication is small.

22. The apparatus according to claim 17,
wherein said identification information on said predetermined region is explicit information or null information if said electronic document is also stored in said predetermined region.

23. The apparatus according to claim 17, further comprising:
pull-type content object downloading means for downloading a pull-type content object according to pull delivery, and storing said pull-type content object in said predetermined region,
wherein said electronic document is for displaying a picture including a part obtained by said pull-type content object, said electronic document describing in advance said pull-type content object stored in said predetermined region by means of identification information on said predetermined region and identification information on said pull-type content object, and
wherein said picture displaying means is adapted to read the pull-type content object from said predetermined region according to the description of said electronic document and displaying said picture including said part obtained by said pull-type content object.

24. The apparatus according to claim 17, further comprising:
non-downloaded type content object storing means for storing a non-downloaded type content object input by means of an apparatus other than that of downloading in said predetermined region,
wherein said electronic document is for displaying a picture including a part obtained by said non-downloaded type content object, said electronic document describing in advance said non-downloaded type content object stored in said predetermined region by means of identification information on said predetermined region and identification information on said non-downloaded type content object, and
wherein said picture displaying means is adapted to read the non-downloaded type content object from said predetermined region according to the description of said electronic document and displaying said picture including said part obtained by said non-downloaded type content object.

25. The apparatus according to claim 17,
wherein said electronic document is for displaying a picture including a part obtained by a pull-type content object downloaded according to pull delivery,
wherein said electronic document describes in advance said pull-type content object according to identification information position on a network where said pull-type content object exists and identification information on said pull-type content object, wherein the apparatus further comprises means for downloading said pull-type content object according to pull delivery from said position on the network in accordance with the description of said electronic document, and
wherein said picture displaying means is adapted to display said picture including said part obtained by said pull-type content object.

26. The apparatus according to claim 17,
wherein the downloading according to push delivery is started in response to reception by a terminal of a message for downloading.

27. The apparatus according to claim 26, further comprising:
a management server under control of which the message is transmitted to said terminal when said push-type content object is updated, said management server being a management server that manages both the update of said push-type content object and the transmission of said message, a management server that receives a report of the update of said push-type content object or a management server that monitors the update of said push-type content object.

28. The apparatus according to claim 26,
wherein said message includes identification information on a position on a network where said push-type content object exists and identification information on said push-type content object.

29. The apparatus according to claim 17,
wherein said predetermined region includes a plurality of regions for a picture of a same category,
wherein said push-type content object downloading means is adapted to store said push-type content object at least in a selected one of said plurality of regions, and
wherein said picture displaying means is adapted to read said push-type content object from the selected one of said predetermined plurality of regions.

30. The apparatus according to claim 29,
wherein at least a part of the content object stored in a specific region among said plurality of regions is excluded from a target of downloading according to the push delivery.

31. The apparatus according to claim 29,
wherein said push-type content object having same identification information is stored in each of said plurality of regions, and
wherein said picture displaying means is adapted to read the push-type content object having a same identification information from a selected one of said plurality of regions according to said description of said electronic document.

32. The apparatus according to claim 17, further comprising:
corresponding relationship holding means for holding the corresponding relationship between directory information of said predetermined region and information indicating that said predetermined region is specified, and
wherein said corresponding relationship is referred to when storing said push-type content object in said predetermined region and when reading said push-type content object from said predetermined region.

33. A program for causing a computer to execute a picture display method according to any one of claims 1 through 16.

34. A terminal having a picture display apparatus according to any one of claims 17 through 26 and 28 through 30.
